# EUROPÄISCHE PATENTANMELDUNG

(11) **EP 3 135 453 A1**
(43) Veröffentlichungstag der Anmeldung: **01.03.2017**
(21) Anmeldenummer: 16001723.2
(22) Anmeldetag: 03.08.2016
(51) Int. Cl.: B29C 45/26, B29C 45/44, B65D 43/02

(54) **VERSCHLUSSDECKEL UND SPRITZGIESSFORM ZU DESSEN HERSTELLUNG**

(30) Priorität: 26.08.2015 DE 102015011207
(71) Anmelder: Andreas Stihl AG & Co. KG, 71336 Waiblingen (DE)
(72) Erfinder: Zimmermann, Helmut, D-73663 Berglen (DE)
(74) Vertreter: Reinhardt, Annette

(57) **Zusammenfassung**

Die Erfindung betrifft einen Verschlussdeckel (1) und eine Spritzgießform zu dessen Herstellung. Der Verschlussdeckel (1) besitzt einen Deckelboden (2) zum Verschluss einer Behälteröffnung (21) und eine Umfangswand (3). An der Umfangswand (3) ist ein Innengewinde (11) ausgebildet. Das Innengewinde (11) besitzt eine Gewindeachse (16) und ist durch mindestens zwei in Umfangsrichtung des Verschlussdeckels (1) voneinander beabstandete Gewindeabschnitte (14) gebildet. Der Verschlussdeckel (1) weist am Deckelboden (2) mindestens eine Entformungsöffnung (6) auf. Mindestens ein Gewindeabschnitt (14) ist in Richtung der Gewindeachse (16) des Innengewindes (11) gesehen von der Entformungsöffnung (6) am Deckelboden (2) des Verschlussdeckels (1) überdeckt. Die Spritzgießform (30) weist eine erste Formhälfte (31) und eine zweite Formhälfte (32) auf. Die erste Formhälfte (31) besitzt eine erste Formwand (35), die eine Außenseite (43) der Umfangswand (3) des Verschlussdeckels (1) abformt. An der ersten Formhälfte (31) ist mindestens ein Steg (33) angeordnet, der sich in einem radialen Abstand (d) zur Formwand (35) in Richtung der Gewindeachse (16) erstreckt. Zwischen der ersten Formhälfte (31) und der zweiten Formhälfte (32) ist ein Hohlraum (40) gebildet. Der mindestens eine Steg (33) ragt durch den Hohlraum (40) und besitzt eine bezogen auf die Gewindeachse (16) radial außenliegende Außenfläche (39) und eine bezogen auf die Gewindeachse (16) radial innenliegende Innenfläche (45), die beide den Hohlraum (40) begrenzen.

## Beschreibung

Die Erfindung betrifft einen Verschlussdeckel nach dem Oberbegriff des Anspruchs 1 und eine Spritzgießform zu dessen Herstellung.

Aus der US 4,721,220 ist ein Verschlussdeckel zum Aufschrauben auf das Außengewinde eines Behälters bekannt. Der Verschlussdeckel besitzt ein Innengewinde, dessen Segmente in Umfangsrichtung des Verschlussdeckels voneinander getrennt liegen und sich in Vertikalrichtung nicht überlappen. Ein solcher Verschlussdeckel wird im Spritzgussverfahren hergestellt und der Kern zur Formung des Innengewindes nach Beendigung des Spritzgussverfahrens in Axialrichtung des Innengewindes unter Dehnung der Umfangswand des Verschlussdeckels abgezogen. Durch die überlappungsfreie Segmentierung des Innengewindes lässt sich der Kern leichter entfernen, da Hinterschneidungen jeweils nur von einem Segment gebildet werden.

Dennoch muss zur Entfernung des Kerns Energie aufgewendet werden und das zur Herstellung des Verschlussdeckels verwendete Material muss eine entsprechende Flexibilität aufweisen. Darüber hinaus ist nicht ausgeschlossen, dass die zum Herausziehen des Kerns notwendige Aufdehnung des Verschlussdeckels den Verschlussdeckel verformt und nachhaltig beschädigt.

Der Erfindung liegt die Aufgabe zugrunde, einen Verschlussdeckel der gattungsgemäßen Art derart weiterzubilden, dass eine einfache und kostengünstige Herstellung ermöglicht ist. Eine weitere Aufgabe der Erfindung liegt darin, eine Spritzgießform zur Herstellung eines Verschlussdeckels anzugeben.

Diese Aufgabe wird bezüglich des Verschlussdeckels durch einen Verschlussdeckel mit den Merkmalen des Anspruchs 1 gelöst.

Bezüglich der Spritzgießform wird die Aufgabe durch eine Spritzgießform mit den Merkmalen des Anspruchs 13 gelöst.

Beim erfindungsgemäßen Verschlussdeckel ist vorgesehen, dass der Verschlussdeckel am Deckelboden mindestens eine Entformungsöffnung aufweist, wobei mindestens ein Gewindeabschnitt in Richtung der Gewindeachse des Innengewindes gesehen von der Entformungsöffnung am Deckelboden des Verschlussdeckels überdeckt ist. Durch die Anordnung von Entformungsöffnungen im Deckelboden des Verschlussdeckels ist eine Herstellung des Verschlussdeckels im Spritzgussverfahren ohne Verwendung eines Spritzgusskerns ermöglicht. Der erfindungsgemäße Verschlussdeckel lässt sich mit lediglich zwei Formhälften einer Spritzgießform herstellen. Hierbei werden die beiden sich gegenüber liegenden und aus der Innenseite der Umfangswand des Verschlussdeckels hervorstehenden Längsseiten des Innengewindes des Verschlussdeckels jeweils von einer der beiden Formhälften der Spritzgießform geformt. Die erste, obere Längsseite des Innengewindes, die dem Deckelboden des Verschlussdeckels zugewandt ist, wird hierbei durch einen Steg der ersten Formhälfte der Spritzgießform geformt. Die beiden Formhälften bilden gemeinsam einen hinterschneidungsfreien Hohlraum. Nach dem Aushärten des eingespritzten Werkstoffs lässt sich der Steg der ersten Formhälfte durch die erfindungsgemäße Entformungsöffnung hindurch durch einfaches Auseinanderziehen der beiden Formhälften entfernen. Auf diese Weise ist eine einfache und schnelle Herstellung des erfindungsgemäßen Verschlussdeckels möglich.

Vorteilhaft ist für jeden Gewindeabschnitt genau eine Entformungsöffnung vorgesehen. Dadurch kann das gesamte Innengewinde des Verschlussdeckels mit Hilfe der Entformungsöffnungen von den voneinander beabstandeten Gewindeabschnitten gebildet sein. Darüber hinaus kann dadurch die Querschnittsfläche einer Entformungsöffnung senkrecht zur Gewindeachse auf die Größe der Querschnittsfläche eines zugehörigen Gewindeabschnitts senkrecht zur Gewindeachse abgestimmt sein. Auf diese Weise ist die Größe der Entformungsöffnungen im Verschlussdeckel minimal und der Verschlussdeckel stabil.

Vorteilhaft sind eine Vielzahl von gleichmäßig über den Umfang verteilten Entformungsöffnungen und eine Vielzahl von Gewindeabschnitten vorgesehen. Weiterhin ist vorteilhaft vorgesehen, dass der Abstand zwischen den in Umfangsrichtung nebeneinander liegenden Entformungsöffnungen das 0,5fache bis 2fache, insbesondere das 1 fache bis 2fache der in Umfangsrichtung gemessenen Länge der Gewindeabschnitte beträgt. Durch die Anordnung einer Vielzahl von gleichmäßig über den Umfang verteilten Gewindeabschnitten ist ein stabiles Innengewinde ausgebildet. Dadurch, dass der Abstand zwischen den in Umfangsrichtung nebeneinander liegenden Entformungsöffnungen das 0,5fache bis 2fache, insbesondere das 1 fache bis 2fache der in Umfangsrichtung gemessenen Länge der Gewindeabschnitte beträgt, besitzt der Verschlussdeckel trotz der Entformungsöffnungen eine ausreichende Stabilität.

Der Deckelboden und die Umfangswand mit dem Innengewinde sind vorteilhaft als einteiliges Bauteil ausgebildet. Dadurch sind zur Herstellung des Verschlussdeckels weniger Arbeitsschritte erforderlich, und die Stabilität des Deckels ist hoch.

Vorteilhaft ist vorgesehen, dass das Innengewinde höchstens eine Windung aufweist. Das von den Gewindeabschnitten gebildete, in Umfangsrichtung unterbrochene Innengewinde erstreckt sich auf der Innenseite der Umfangswand demnach über weniger als 360° um die Gewindeachse. Bei mehreren Windungen müssen die Gewindeabschnitte so angeordnet werden, dass sie sich in Richtung der Gewindeachse nicht überlappen, um eine Entformung zu ermöglichen. Bei nur einer Windung können die Gewindeabschnitte ausreichend lang ausgebildet werden, so dass durch die Gewindeabschnitte des Innengewindes des Verschlussdeckels ein stabiles Innengewinde gebildet ist und der Abstand zwischen den Gewindeabschnitten in Umfangsrichtung klein gewählt werden kann, ohne dass die Stabilität des Verschlussdeckels durch die Entformungsöffnungen stark reduziert ist.

Vorteilhaft ist vorgesehen, dass der Verschlussdeckel an seiner Außenseite eine Profilierung aufweist. Dadurch kann der Verschlussdeckel von einem Bediener sicher und einfach ohne ein Abrutschen gedreht werden. Die Profilierung verleiht dem Verschlussdeckel erhöhte Stabilität.

Vorteilhaft ist vorgesehen, dass die Profilierung durch sich in Richtung der Gewindeachse erstreckende Erhöhungen gebildet ist. Die sich in Längsrichtung der Gewindeachse erstreckenden Erhöhungen verleihen dem Verschlussdeckel zusätzliche Stabilität in seiner Umfangsrichtung.

Vorteilhaft ist vorgesehen, dass die Erhöhungen sich bis auf den Deckelboden erstrecken, wobei die Erhöhungen insbesondere am Deckelboden des Verschlussdeckels jeweils zwischen benachbarte Entformungsöffnungen ragen. Auf diese Weise ist der Bereich zwischen den von den Entformungsöffnungen im Deckelboden des Verschlussdeckels ausgebildeten Löchern zusätzlich durch die Erhöhungen verstärkt und versteift. Die Versteifung des Deckelbodens im Bereich zwischen den Entformungsöffnungen durch die Erhöhungen führt zu einer erhöhten Stabilität des Verschlussdeckels und zu einem ansprechenden Erscheinungsbild.

Vorteilhaft ist vorgesehen, dass am Deckelboden eine Eingriffsvertiefung zum Eingriff eines Werkzeugs ausgebildet ist. In diese Eingriffsvertiefung kann ein Werkzeug zum Drehen des Verschlussdeckels eingebracht werden. Dadurch ist das Öffnen und Festziehen des Verschlussdeckels auf einem entsprechenden Gegengewinde erleichtert. Vorteilhaft ist vorgesehen, dass an der Innenseite des Verschlussdeckels eine Aufnahme für einen Abschnitt einer Verliersicherung ausgebildet ist. Durch die Ausbildung einer Aufnahme für einen Abschnitt einer Verliersicherung kann der Verschlussdeckel mit einer Verliersicherung verbunden werden, die den Verschlussdeckel am zu verschließenden Objekt vor einem Verlieren sichert. Die Aufnahme ist insbesondere an der Stirnseite des Stutzens ausgebildet. Durch die Ausbildung der Aufnahme an der Stirnseite des Stutzens kann die Verliersicherung im Inneren des zu verschließenden Objekts angeordnet werden und ist auf diese Weise sicher aufbewahrt.

Vorteilhaft ist vorgesehen, dass an der Innenseite des Deckelbodens des Verschlussdeckels eine Dichtringanlagefläche ausgebildet ist, und dass auf der Dichtringanlagefläche ein Dichtring angeordnet ist. Der Dichtring dichtet vorteilhaft die Entformungsöffnungen ab und verschließt das zu verschließende Objekt sicher. Dadurch kann das Eindringen von Schmutz durch die Entformungsöffnungen an die Innenseite des Verschlussdeckels auf einfache Weise vermieden werden.

Eine erfindungsgemäße Spritzgießform zur Herstellung eines erfindungsgemäßen Verschlussdeckels weist eine erste und eine zweite Formhälfte auf, wobei die erste Formhälfte eine erste Formwand besitzt, die eine Außenseite der Umfangswand des Verschlussdeckels abformt, und wobei an der ersten Formhälfte mindestens ein Steg angeordnet ist, der sich in einem radialen Abstand zur Formwand in Richtung der Gewindeachse erstreckt. Zwischen der ersten Formhälfte und der zweiten Formhälfte ist ein Hohlraum gebildet. Der mindestens eine Steg ragt durch den Hohlraum. Der mindestens eine Steg besitzt eine bezogen auf die Gewindeachse des Innengewindes des Verschlussdeckels radial außenliegende Außenfläche und eine bezogen auf die Gewindeachse des Innengewindes des Verschlussdeckels radial innenliegende Innenfläche. Die Gewindeachse des Innengewindes des Verschlussdeckels ist bezogen auf die Spritzgießform die Achse, die sich an derselben Position relativ zu den Formhälften erstreckt, an der sich die Gewindeachse des Innengewindes des Verschlussdeckels erstreckt, wenn die Spritzgießform geschlossen ist und einen Verschlussdeckel enthält. Sowohl die Innenfläche des Stegs als auch die Außenfläche des Stegs begrenzen den Hohlraum zwischen der ersten und der zweiten Formhälfte. Mit der erfindungsgemäßen Spritzgießform ist die Herstellung des erfindungsgemäßen Verschlussdeckels auf einfache Weise möglich. Hierbei ist die Verwendung eines vergleichsweise aufwändigen, zur Entformung zu drehenden Spritzgusskerns zur Ausbildung des Innengewindes des Verschlussdeckels nicht erforderlich. Dies ist deshalb ermöglicht, weil der erfindungsgemäße Verschlussdeckel keine Hinterschneidung aufweist. Nachdem das Spritzgussmaterial erstarrt ist, kann der hergestellte Verschlussdeckel aus der Spritzgießform durch einfaches Auseinanderziehen der ersten und der zweiten Formhälfte entnommen werden. Die Spritzgießform kann drehungsfrei und dehnungsfrei vom hergestellten Verschlussdeckel entfernt werden. Sowohl die Spritzgießform selbst als auch der Verschlussdeckel werden dabei weder verschlissen noch beschädigt. Der Verschlussdeckel kann aus einem formstabilen Kunststoff mit großer Wandstärke hergestellt werden, da kein Aufdehnen des Verschlussdeckels zur Entformung notwendig ist. Der Verschlussdeckel kann auf einfache Weise als einteiliges Bauteil im Kunststoffspritzguss hergestellt werden.

Vorteilhaft sind für die Spritzgießform mehrere in Umfangsrichtung zueinander beabstandete Stege vorgesehen, wobei die Stirnseiten der Stege Abschnitte einer ersten Längsseite des Innengewindes bilden. Auf diese Weise werden die Gewindeabschnitte des Innengewindes des erfindungsgemäßen Verschlussdeckels hinterschneidungsfrei ohne Verwendung eines Gusskerns hergestellt. Nach dem Aushärten des verwendeten Spritzgussmaterials werden die Stege der Spritzgießform in Richtung der Gewindeachse durch die durch den Deckelboden durchgehenden Entformungsöffnungen gezogen.

Vorteilhaft ist vorgesehen, dass an der zweiten Formhälfte der Spritzgießform Formabschnitte ausgebildet sind, die Abschnitte einer zweiten Längsseite des Innengewindes bilden.

Ausführungsbeispiele der Erfindung sind nachstehend anhand der Zeichnung näher erläutert. Es zeigen:
- Fig. 1: eine perspektivische Darstellung eines erfindungsgemäßen Verschlussdeckels in einer Ansicht auf die Außenseite des Deckelbodens,
- Fig. 2: eine perspektivische Darstellung des Verschlussdeckels aus Fig. 1 in einer Ansicht auf die Innenseite des Deckelbodens und der Umfangswand,
- Fig. 3: eine Seitenansicht auf die Außenseite der Umfangswand des Verschlussdeckels aus den Fig. 1 und 2,
- Fig. 4: eine Draufsicht auf die Außenseite des Deckelbodens des Verschlussdeckels aus den Fig. 1 bis 3 in Richtung des Pfeils IV in Fig. 3,
- Fig. 5: eine Draufsicht auf die Innenseite des Deckelbodens des Verschlussdeckels aus den Fig. 1 bis 4 in Richtung des Pfeils V in Fig. 3,
- Fig. 6: einen Schnitt entlang der Linie VI-VI in Fig. 4 mit zusätzlicher Darstellung einer Verliersicherung,
- Fig. 7: einen Schnitt durch eine geschlossene Spritzgießform mit einem Verschlussdeckel nach den Fig. 1 bis 6,
- Fig. 8: einen Schnitt durch den Verschlussdeckel und die Spritzgießform aus Fig. 7, wobei die zweite Formhälfte aus dem Verschlussdeckel entfernt ist,
- Fig. 9 und 10: Explosionsdarstellungen des Verschlussdeckels und der Spritzgießform aus den Fig. 7 und 8,
- Fig. 11: einen Schnitt durch den Verschlussdeckel aus den Fig. 1 bis 10 bei Anordnung auf einem zugehörigen Behälter.

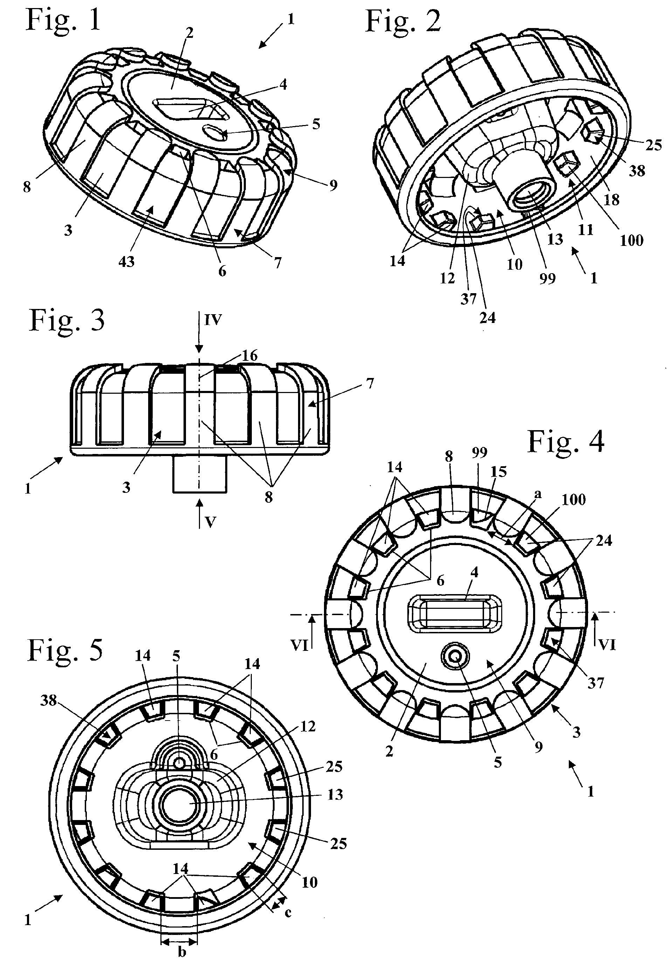

Die Fig. 1 und 2 zeigen einen Verschlussdeckel 1, der zum Verschließen eines Behälters dient. Der Verschlussdeckel 1 kann beispielsweise als Verschluss eines Tankbehälters, insbesondere eines Kraftstofftanks oder eines Öltanks in einem handgeführten Arbeitsgerät wie einer Motorsäge, einem Trennschleifer, einem Freischneider oder dergleichen dienen.

Der Verschlussdeckel 1 besitzt einen Deckelboden 2, der zum Verschluss einer Behälteröffnung dient. Vom Rand des Deckelbodens 2 erstreckt sich eine hohlzylindrische Umfangswand 3, die einteilig mit dem Deckelboden 2 ausgebildet ist.

Im Deckelboden 2 des Verschlussdeckels 1 ist eine Entlüftungsöffnung 5 angeordnet. Im Ausführungsbeispiel ist die Entlüftungsöffnung 5 ein Ventil, das für den Abbau eines möglicherweise im Innenraum eines mit dem Verschlussdeckel 1 verschlossenen Behälters vorhandenen Überdrucks sorgt. Die Entlüftungsöffnung 5 kann auch als Belüftungsöffnung ausgelegt sein.

Der Verschlussdeckel 1 besitzt eine Außenseite 9 und eine Innenseite 10. Die Umfangswand 3 besitzt eine Außenseite 43 und eine Innenseite 18. An der Innenseite 18 der Umfangswand 3 ist ein Innengewinde 11 ausgebildet. Es kann auch vorgesehen sein, dass an der Umfangswand 3 ein Außengewinde ausgebildet ist.

Der Verschlussdeckel 1 besitzt an seiner Außenseite 9 eine Profilierung 7. Die Profilierung 7 ist durch Erhöhungen 8 an der Außenseite 43 der Umfangswand 3 gebildet, die sich in radialer Richtung bezogen auf eine in Fig. 3 dargestellte Gewindeachse 16 erstrecken. Die Erhöhungen 8 erstrecken sich in Richtung der Gewindeachse 16 über die gesamte Außenseite 43 der Umfangswand 3 bis auf den Deckelboden 2. Die Erhöhungen 8 stehen in Richtung parallel zur Gewindeachse 16 an der Außenseite 9 des Deckelbodens 2 hervor. Die Erhöhungen 8 sind in Umfangsrichtung des Verschlussdeckels 1 in gleichmäßigen Abständen zueinander angeordnet. Die von den Erhöhungen 8 gebildete Profilierung 7 ermöglicht ein rutschfreies Drehen des Verschlussdeckels 1 zum Festziehen und Lösen des Verschlussdeckels 1 auf einem Gegengewinde einer Behälteröffnung. Die Erhöhungen 8 der Profilierung 7 ragen am Deckelboden 2 des Verschlussdeckels 1 jeweils zwischen benachbarte Entformungsöffnungen 6.

An der Außenseite 9 des Deckelbodens 2 ist eine im Querschnitt rechteckige Eingriffsvertiefung 4 zum Eingriff eines Werkzeugs ausgebildet. Über die Drehung eines in die Eingriffsöffnung 4 eingebrachten Werkzeugs kann der Verschlussdeckel 1 zum Lösen oder Festziehen des Verschlussdeckels auf einem Gegengewinde einer Behälteröffnung gedreht werden.

Wie in Fig. 2 gezeigt, ist die Eingriffsvertiefung 4 an der Innenseite 10 des Verschlussdeckels 1 an einem Stutzen 12 ausgebildet. Der Stutzen 12 ist an der Innenseite 10 des Deckelbodens 2 des Verschlussdeckels 1 ausgebildet und erstreckt sich in Richtung der Gewindeachse 16. Der Stutzen 12 besitzt eine Stirnseite 17. Die Stirnseite 17 ist dem Deckelboden 2 abgewandt. An der Stirnseite 17 ist eine Aufnahme 13 für einen Abschnitt einer Verliersicherung 19 angeformt.

Das Innengewinde 11 ist durch mehrere in Umfangsrichtung des Verschlussdeckels 1 voneinander beabstandete Gewindeabschnitte 14 gebildet. Die Gewindeabschnitte 14 besitzen Oberseiten 24, die dem Deckelboden 2 zugewandt liegen. Die Oberseiten 24 bilden gemeinsam die erste, obere Längsseite 37 des Innengewindes 11. Die Gewindeabschnitte 14 besitzen Unterseiten 25, die dem Deckelboden 2 abgewandt liegen. Die Unterseiten 25 bilden gemeinsam die zweite, untere Längsseite 38 des Innengewindes 11. Die Oberseiten 24 und die Unterseiten 25 der Gewindeabschnitte 14 begrenzen die Gewindeabschnitte 14 in Richtung der in Fig. 3 dargestellten Gewindeachse 16.

Die Fig. 4 und 5 zeigen Draufsichten auf die Außenseite 9 und die Innenseite 10 des Verschlussdeckels 1. Im Deckelboden 2 des Verschlussdeckels 1 sind in Umfangsrichtung des Verschlussdeckels 1 kreisförmig um die Gewindeachse 16 (Fig. 3) umlaufend in regelmäßigen Abständen zueinander die Entformungsöffnungen 6 angeordnet. Die Entformungsöffnungen 6 sind Löcher im Deckelboden 2 und durchdringen den Deckelboden 2 vollständig. In den Ansichten nach den Fig. 4 und 5, in Richtung der in Fig. 3 dargestellten Gewindeachse 16 gesehen, weisen die Entformungsöffnungen 6 einen näherungsweise trapezförmigen Querschnitt auf. Hierbei sind die sich parallel gegenüberliegenden Seiten dieser Trapezflächen abgerundet. Die breitere der beiden abgerundeten Seiten liegt dabei weiter entfernt von den Gewindeachse 16 und näher zur Umfangswand 3.

Bei der in Fig. 4 dargestellten Draufsicht auf die Außenseite des Deckelbodens 2 in Richtung parallel zur Gewindeachse 16 sind durch die durchgängigen Entformungsöffnungen 6 im Deckelboden 2 die Gewindeabschnitte 14 des Innengewindes 11 sichtbar.

In Richtung der Gewindeachse 16 des Innengewindes 11 gesehen liegen die Gewindeabschnitte 14 vollständig innerhalb der trapezförmigen Querschnitte der Entformungsöffnungen 6. In Richtung der Gewindeachse 16 des Innengewindes 11 gesehen ist jeder Gewindeabschnitt 14 von jeweils einer Entformungsöffnung 6 am Deckelboden 2 eines Verschlussdeckels 1 überdeckt. Der Querschnitt einer Entformungsöffnung 6 in Richtung der Gewindeachse 16 gesehen ist lediglich unwesentlich größer als der Querschnitt des zugeordneten Gewindeabschnitts 14 in Richtung der Gewindeachse 16 gesehen. Ebenso wie die Entformungsöffnungen 6 sind die Gewindeabschnitte 14 gleichmäßig über den Umfang der Innenseite 18 der Umfangswand 3 des Verschlussdeckels 1 verteilt. Insgesamt sind zwölf Entformungsöffnungen 6 und zwölf zugeordnete Gewindeabschnitte 14 vorgesehen. Ein Abstand a zwischen in Umfangsrichtung nebeneinander liegenden Entformungsöffnungen 6 beträgt das 0,5fache bis 2fache einer in Umfangsrichtung gemessenen Länge c eines Gewindeabschnitts 14. Alle zwölf Gewindeabschnitte besitzen in Umfangsrichtung dieselbe Länge c. Im Ausführungsbeispiel beträgt der Abstand a zwischen den in Umfangsrichtung nebeneinander liegenden Entformungsöffnungen 6 das 1 fache bis 2fache der in Umfangsrichtung gemessenen Länge c der Gewindeabschnitte 14. Zwischen den Gewindeabschnitten 14 liegt in Umfangsrichtung ein Abstand b. Der Abstand b zwischen den in Umfangsrichtung nebeneinander liegenden Gewindeabschnitten 14 ist unwesentlich größer als der Abstand a zwischen den in Umfangrichtung nebeneinander liegenden Entformungsöffnungen 6. Der Abstand b zwischen den in Umfangsrichtung nebeneinander liegenden Gewindeabschnitten 14 beträgt das 0,5fache bis 2fache, insbesondere das 1fache bis 2fache, der in Umfangsrichtung gemessenen Länge c der Gewindeabschnitte 14.

Fig. 5 zeigt die Innenseite 10 des Verschlussdeckels 1 in Richtung der Gewindeachse 16 gesehen. Das von allen Gewindeabschnitten 14 gebildete Innengewinde 11 erstreckt sich von einem Gewindeanfang 99 über den gesamten Umfang der Innenseite 18 der Umfangswand 3 bis zu einem Gewindeende 100 und wird von allen zwölf Gewindeabschnitten 14 gebildet. Der Gewindeanfang 99 ist vom am weitesten vom Deckelboden 2 entfernten Gewindeabschnitt 14 gebildet. Das Gewindeende 100 ist vom am wenigsten weit vom Deckelboden 2 entfernten Gewindeabschnitt 14 gebildet. Wie in Fig. 2 zu erkennen, nimmt der Abstand der Gewindeabschnitte 14 zum Bodendeckel 2 vom Gewindeanfang 99 bis zum Gewindeende 100 des Verschlussdeckels 1 im Uhrzeigersinn kontinuierlich ab. Wie in Fig. 4 dargestellt, weist der Gewindeanfang 99 eine Einführschräge 15 auf. Dadurch kann der Gewindeanfang 99 leicht in ein Gegengewinde eingeführt werden. Hierzu ist eine sich parallel zur Gewindeachse 16 erstreckende Fläche des Gewindeanfangs 99 derartig angeschrägt, dass ihr Abstand zur Umfangswand 3, wie in Fig. 5, in Umfangsrichtung mit dem Uhrzeigersinn kontinuierlich zunimmt. Das Innengewinde 11 weist, wie in Fig. 2 zu erkennen, lediglich eine einzige Windung auf. Das Innengewinde 11 erstreckt sich in Umfangsrichtung über weniger als 360° des Umfangs der Innenseite 18 der Umfangswand 3. In Richtung der Gewindeachse 16 des Innengewindes 11 gesehen überlappen sich die Gewindeabschnitte 14 nicht.

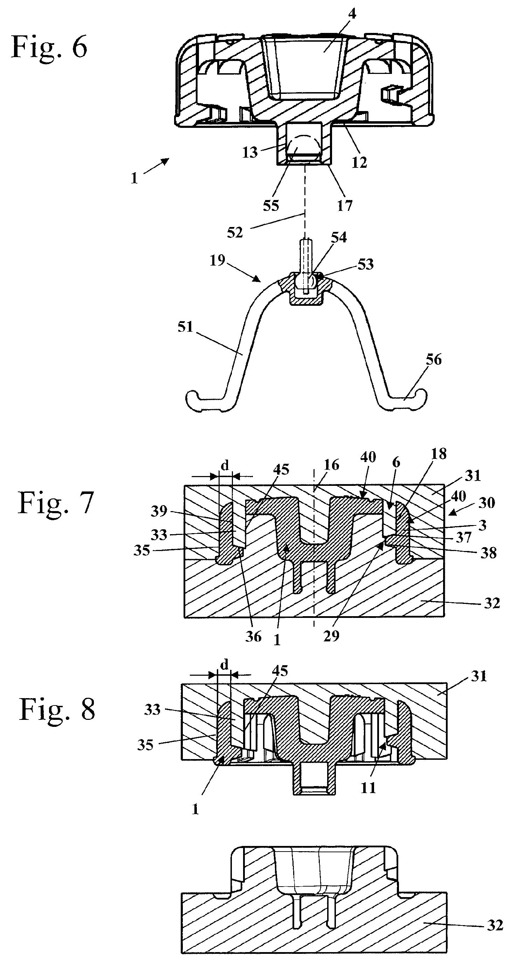

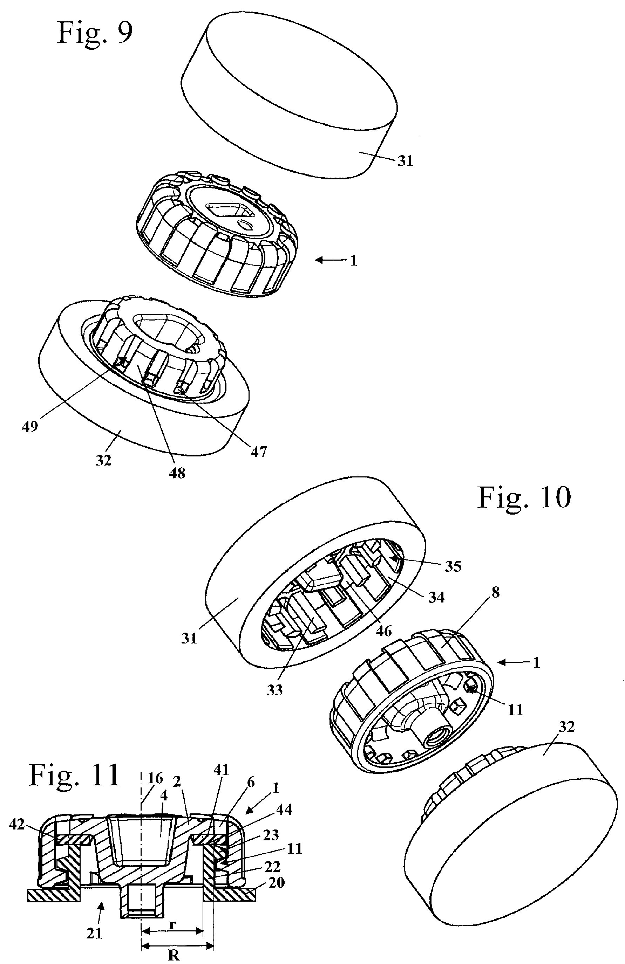

Fig. 11 zeigt den Verschlussdeckel 1 auf einem Behälterstutzen 22. Der Verschlussdeckel 1 verschließt die Behälteröffnung 21 des zugehörigen Behälters 20. Hierzu ist der Verschlussdeckel 1 auf den Behälterstutzen 22 aufgeschraubt. Das Innengewinde 11 des Verschlussdeckels 1 und das Außengewinde 23 des Behälterstutzens 22 greifen dabei ineinander. Der Behälterstutzen 22 besitzt eine Stirnseite 44, die der Behälteröffnung 21 abgewandt ist. An der Innenseite 10 des Deckelbodens 2 ist eine kreisförmig umlaufende Dichtringanlagefläche 41 ausgebildet. An der Dichtringanlagefläche 41 liegt ein Dichtring 42 an. Die Dichtringanlagefläche 41 und der Dichtring 42 überdecken die Entformungsöffnungen 6 vollständig. Der Dichtring 42 erstreckt sich radial zwischen Behälterstutzen 22 und der Innenseite 18 der Umfangswand 3. Wenn der Verschlussdeckel 1 wie im Ausführungsbeispiel nach Fig. 11 auf den Behälterstutzen 22 geschraubt ist, ist der Dichtring 42 zwischen der Dichtringanlagefläche 41 des Verschlussdeckels 1 und der Stirnseite 44 des Behälterstutzens 22 angeordnet. Auf diese Weise dichtet der Dichtring 42 im Zusammenwirken mit dem Verschlussdeckel 1 die Behälteröffnung 21 ab. Der Behälterstutzen 22 besitzt einen Innenradius r. Der Innenradius r des Behälterstutzens 22 ist kleiner als ein kleinster Abstand R zwischen der Gewindeachse 16 und den Entformungsöffnungen 6. Dadurch ist sichergestellt, dass der Dichtring 42 vom Deckelboden 2 des Verschlussdeckels 1 in Umfangsrichtung des Behälterstutzens 22 durchgehend an die Stirnseite 44 des Behälterstutzens 22 gepresst wird. Auf diese Weise ist die Behälteröffnung 21 durch den Verschlussdeckel 1 im Zusammenwirken mit dem Dichtring 42 vollständig abgedichtet. Es kann auch eine Ausführung ohne Dichtring vorgesehen sein. Solange der Innenradius r des Behälterstutzens 22 kleiner als der kleinste Abstand R zwischen der Gewindeachse 16 und den Entformungsöffnungen 6 ist, verschließt der Deckelboden 2 des Verschlussdeckels 1 die Behälteröffnung 21 auch ohne Dichtring vollständig. Wie in Fig. 6 dargestellt, besteht die Verliersicherung 19 aus einem Bügel 51, einem Gelenkelement 54, einem Seil 52 und einem Befestigungselement 55. Der Bügel 51 besitzt zwei Hakenabschnitte 56, mit denen er sich an der Innenwand des Behälters 20 (Fig. 11) benachbart zur Behälteröffnung 21 des Behälters 20 abstützt. Der Abstand der beiden Hakenabschnitte 56 des Bügels 51 ist größer als der Durchmesser der zu verschließenden Behälteröffnung 21. Der Bügel 51 ist im Wesentlichen U-förmig. Die Hakenabschnitte 56 sind mit den offenen Enden des "U"s des Bügels 51 verbunden und in Bezug auf das "U" nach außen abgewinkelt. An der den offenen Enden gegenüberliegenden Spitze des "U"s des Bügels 51 ist eine Aufnahme 53 vorgesehen, in der ein Gelenkelement 54 drehbar und in einem vorgesehenen Winkelbereich verschwenkbar gehalten ist. Dadurch ist der Bügel 51 um die Längsachse des "U"s drehbar und verschwenkbar am Gelenkelement 54 gehalten. Das Gelenkelement 54 ist über das Seil 52, mit einem Befestigungselement 55 verbunden. Das Befestigungselement 55 in der Fig. 6 ist kugelförmig. Das Befestigungselement 55 ist in der Aufnahme 13 des Stutzens 12 des Verschlussdeckels 1 aufgenommen. Zum Schutz gegen einen Verlust des Verschlussdeckels 1 wird die Verliersicherung 19 im Inneren des in Fig. 11 gezeigten Behälters 20 angeordnet. Bei einem Lösen und Entfernen des Verschlussdeckels 20 vom Behälterstutzen 22 kommen die Hakenabschnitte 56 der Verliersicherung 19 zur Anlage an der die Behälteröffnung 21 umgebenden Wand des Behälters 20. Die Verliersicherung 19 verbindet den Verschlussdeckel 1 mit dem Behälter 20, auch wenn der Verschlussdeckel 1 nicht auf das Außengewinde 23 des Behälterstutzens 22 geschraubt ist und verhindert so ein mögliches Verlieren des Verschlussdeckels 1.

Die Fig. 7 zeigt einen Schnitt durch den Verschlussdeckel 1 in einer geschlossenen Spritzgießform 30. Die Schnittebene beinhaltet die Gewindeachse 16. Die Spritzgießform 30 weist eine erste Formhälfte 31 und eine zweite Formhälfte 32 auf. Die erste Formhälfte 31 formt große Teile der Außenseite 9 des Verschlussdeckels 1, und die zweite Formhälfte 32 formt große Teile der Innenseite 10 des Verschlussdeckels 1. Die erste Formhälfte 31 besitzt eine Formwand 35, die die Außenseite 43 der Umfangswand 3 des Verschlussdeckels 1 abformt. An der ersten Formhälfte 31 sind zwölf Stege 33 angeordnet. Die Stege 33 erstrecken sich parallel zur Gewindeachse 16 in einem in Bezug auf die Gewindeachse 16 radialen Abstand d zur Formwand 35. Die Stege 33 formen sowohl die Entformungsöffnungen 6, als auch einen Teil der Innenseite 18 der Umfangswand 3. Der Abstand d entspricht der Wandstärke der Umfangswand 3 im Bereich der Stege 33. Auch in Umfangsrichtung der Umfangswand 3 zwischen den Stegen 33 entspricht die Wandstärke der von der Spritzgießform 30 geformten Umfangswand 3 dem Abstand d. In Umfangsrichtung der Umfangswand 3 zwischen den Stegen 33 wird die Innenseite 18 der Umfangswand 33 von einer in Fig. 9 dargestellten Außenfläche 48 der zweiten Formhälfte 32 geformt. Die Außenfläche 48 ist in Umfangsrichtung um die Gewindeachse 16 von Ausnehmungen 49 unterbrochen. Im geschlossenen Zustand der Spritzgießform 30 nehmen die Ausnehmungen 49 der zweiten Formhälfte 32 die Stege 33 der ersten Formhälfte 31 teilweise auf.

Wie in Fig. 7 dargestellt, ist zwischen der ersten Formhälfte 31 und der zweiten Formhälfte 32 ein Hohlraum 40 gebildet. Die Stege 33 ragen durch den Hohlraum 40. Die Stege 33 besitzen bezogen auf die Gewindeachse 16 radial außenliegende Außenflächen 39 und bezogen auf die Gewindeachse 16 radial innenliegende Innenflächen 45. Die außenliegende Außenfläche 39 ist der Gewindeachse 16 abgewandt. Die innenliegende Innenfläche 45 ist der Gewindeachse 16 zugewandt. Der Hohlraum 40 erstreckt sich sowohl auf der Seite der gesamten Außenfläche 39, als auch auf der Seite eines Teils der Innenfläche 45. Beide, sowohl die gesamte Außenfläche 39 als auch ein Teil der Innenfläche 45 begrenzen den Hohlraum 40. Die Stege 33 formen im Deckelboden 3 des Verschlussdeckels 1 die Entformungsöffnungen 6 ab.

In Fig. 10 ist zu erkennen, dass die zwölf Stege 33 in Umfangsrichtung der ersten Formhälfte 31 um die Gewindeachse 16 gleichmäßig zueinander beabstandet angeordnet sind. Wie in den Fig. 7, 8 und 10 dargestellt, besitzen die Stege 33 Stirnseiten 36, die Abschnitte einer ersten, oberen Längsseite 37 des Innengewindes 11 abformen. An der zweiten Formhälfte 32 sind Formabschnitte 47 ausgebildet, die Abschnitte der zweiten, unteren Längsseite 38 des Innengewindes 11 abformen. Die Formabschnitte 47 sind an dem Deckelboden 2 abgewandten Seiten der Ausnehmungen 49 ausgebildet.

Die Profilierung 7 in der Außenseite 43 der Umfangwand 3 des Verschlussdeckels 1 ist durch die Erhöhungen 8, die sich in Richtung der Gewindeachse 16 erstrecken, ausgebildet. Wie Fig. 10 zeigt, werden die Erhöhungen 8 in der Umfangswand 3 des Verschlussdeckels 1 durch korrespondierende Vertiefungen 34 in der Formvvand 35 der ersten Formhälfte 31 abgeformt. Die Formwand 35 erstreckt sich kreisförmig umlaufend um die Gewindeachse 16 über eine erste Innenwand der ersten Formhälfte 31. Die Vertiefungen 34 sind in regelmäßigen Abständen zueinander angeordnet. Die Vertiefungen 34 erstrecken sich über die gesamte Formwand 35 und auch über einen Teil einer Innenseite eines Bodens 46 der ersten Formhälfte 31.

Die beschriebene Spritzgießform mit erster und zweiter Formhälfte kann auch für die Herstellung eines Verschlussdeckels mit Außengewinde vorgesehen sein. Dabei wird durch die erste Formhälfte am Verschlussdeckel die erste, obere Längsseite eines Außengewindes abgeformt, wobei vorteilhaft keine Entformungsöffnungen im Deckelboden entstehen. Die Innenseite des Verschlussdeckels wird vorteilhaft ebenso wie die untere, zweite Längsseite des Außengewindes von der zweiten Formhälfte abgeformt.

## Patentansprüche

1. Verschlussdeckel, wobei der Verschlussdeckel (1) einen Deckelboden (2) zum Verschluss einer Behälteröffnung (21) und eine Umfangswand (3) besitzt, wobei an der Umfangswand (3) ein Innengewinde (11) ausgebildet ist, wobei das Innengewinde (11) eine Gewindeachse (16) besitzt und durch mindestens zwei in Umfangsrichtung des Verschlussdeckels (1) voneinander beabstandete Gewindeabschnitte (14) gebildet ist,
**dadurch gekennzeichnet, dass** der Verschlussdeckel (1) am Deckelboden (2) mindestens eine Entformungsöffnung (6) aufweist, wobei mindestens ein Gewindeabschnitt (14) in Richtung der Gewindeachse (16) des Innengewindes (11) gesehen von der Entformungsöffnung (6) am Deckelboden (2) des Verschlussdeckels (1) überdeckt ist.

2. Verschlussdeckel nach Anspruch 1,
**dadurch gekennzeichnet, dass** für jeden Gewindeabschnitt (14) genau eine Entformungsöffnung (6) vorgesehen ist.

3. Verschlussdeckel nach Anspruch 1 oder 2,
**dadurch gekennzeichnet, dass** eine Vielzahl von gleichmäßig über den Umfang verteilten Entformungsöffnungen (6) und eine Vielzahl von Gewindeabschnitten (14) vorgesehen sind, und dass der Abstand (a) zwischen in Umfangsrichtung nebeneinander liegenden Entformungsöffnungen (6) das 0,5fache bis 2fache der in Umfangsrichtung gemessenen Länge (c) der Gewindeabschnitte (14) beträgt.

4. Verschlussdeckel nach einem der Ansprüche 1 bis 3,
**dadurch gekennzeichnet, dass** der Deckelboden (2) und die Umfangswand (3) mit dem Innengewinde (11) als einteiliges Bauteil ausgebildet sind.

5. Verschlussdeckel nach einem der Ansprüche 1 bis 4,
**dadurch gekennzeichnet, dass** das Innengewinde (11) höchstens eine Windung aufweist.

6. Verschlussdeckel nach einem der Ansprüche 1 bis 5,
**dadurch gekennzeichnet, dass** der Verschlussdeckel (1) an seiner Außenseite (9) eine Profilierung (7) aufweist.

7. Verschlussdeckel nach Anspruch 6,
**dadurch gekennzeichnet, dass** die Profilierung (7) durch sich in Richtung der Gewindeachse (16) erstreckende Erhöhungen (8) gebildet ist.

8. Verschlussdeckel nach Anspruch 7,
**dadurch gekennzeichnet, dass** die Erhöhungen (8) sich bis auf den Deckelboden (2) erstrecken.

9. Verschlussdeckel nach einem der Ansprüche 1 bis 8,
**dadurch gekennzeichnet, dass** am Deckelboden (2) eine Eingriffsvertiefung (4) zum Eingriff eines Werkzeugs ausgebildet ist.

10. Verschlussdeckel nach Anspruch 9,
**dadurch gekennzeichnet, dass** die Eingriffsvertiefung (4) an einem an der Innenseite (10) des Verschlussdeckels (1) ausgebildeten Stutzen (12) ausgebildet ist.

11. Verschlussdeckel nach einem der Ansprüche 1 bis 10,
**dadurch gekennzeichnet, dass** an der Innenseite (10) des Verschlussdeckels (1) eine Aufnahme (13) für einen Abschnitt einer Verliersicherung (19) ausgebildet ist.

12. Verschlussdeckel nach einem der Ansprüche 1 bis 11,
**dadurch gekennzeichnet, dass** an der Innenseite (10) des Deckelbodens (2) des Verschlussdeckels (1) eine Dichtringanlagefläche (41) ausgebildet ist, und dass auf der Dichtringanlagefläche (41) ein Dichtring (42) angeordnet ist.

13. Spritzgießform zur Herstellung eines Verschlussdeckels nach einem der Ansprüche 1 bis 12,
**dadurch gekennzeichnet, dass** die Spritzgießform (30) eine erste Formhälfte (31) und eine zweite Formhälfte (32) aufweist, wobei die erste Formhälfte (31) eine erste Formwand (35) besitzt, die eine Außenseite (43) der Umfangswand (3) des Verschlussdeckels (1) abformt, und wobei an der ersten Formhälfte (31) mindestens ein Steg (33) angeordnet ist, der sich in einem radialen Abstand (d) zur Formwand (35) in Richtung der Gewindeachse (16) erstreckt, dass zwischen der ersten Formhälfte (31) und der zweiten Formhälfte (32) ein Hohlraum (40) gebildet ist, und dass der mindestens eine Steg (33) durch den Hohlraum (40) ragt und eine bezogen auf die Gewindeachse (16) radial außenliegende Außenfläche (39) und eine bezogen auf die Gewindeachse (16) radial innenliegende Innenfläche (45) besitzt, die beide den Hohlraum (40) begrenzen.

14. Spritzgießform nach Anspruch 13,
**dadurch gekennzeichnet, dass** mehrere in Umfangsrichtung zueinander beabstandete Stege (33) vorgesehen sind, wobei die Stirnseiten (36) der Stege (33) Abschnitte einer ersten Längsseite (37) des Innengewindes (11) abformen.

15. Spritzgießform nach Anspruch 14,
**dadurch gekennzeichnet, dass** an der zweiten Formhälfte (32) Formabschnitte (47) ausgebildet sind, die Abschnitte einer zweiten Längsseite (38) des Innengewindes (11) abformen.
